# DEMANDE DE BREVET EUROPEEN

(11) **EP 1 447 278 A2**
(43) Date de publication de la demande: **18.08.2004**
(21) Numéro de dépôt: 04290302.1
(22) Date de dépôt: 05.02.2004
(51) Int. Cl.: B60R 5/04

(54) **Système de montage d'une tablette arriere de vehicule automobile**

(30) Priorité: 12.02.2003 FR 0301697
(71) Demandeur: Centre d'Etude et de Recherche pour l'Automobile ( CERA), 51100 Reims (FR)
(72) Inventeur: Bayle, André-Xavier, 51100 Reims (FR); Debled, Emmanuel, 51500 Taissy (FR)
(74) Mandataire: Geismar, Thierry

(57) **Abrégé**

L'invention concerne un système de montage de la tablette arrière (1) d'un véhicule automobile sur des supports latéraux (2) d'un habillage de compartiment à bagages, ledit système comprenant les deux coins avant (3) de ladite tablette (1) et deux éléments d'accouplement (4) solidaires des supports (2) qui sont agencés pour recevoir lesdits coins (3), lesdits éléments (4) et lesdits coins (3) étant agencés pour permettre une rotation de la tablette (1) par rapport auxdits supports (2) de sorte à permettre le passage réversible de la tablette (1) d'une position d'utilisation dans laquelle la tablette (1) est sensiblement parallèle aux supports latéraux (2), à une position relevée dans laquelle la tablette (1) forme un angle avec les supports latéraux (2), ledit système étant caractérisé en ce qu'il comprend un dispositif de blocage de ladite tablette (1) en position relevée, ledit dispositif comprenant :
- des surfaces de butée complémentaires (8, 9) prévues respectivement sur lesdits coins (3) et sur lesdits éléments d'accouplement (4) qui, lorsque la tablette (1) est en position relevée, empêchent son mouvement vers l'arrière, et
- un moyen de contrainte (14) agencé pour exercer un effort sur la tablette (1) vers l'arrière, de sorte à bloquer la tablette (1) en position relevée.

## Description

L'invention concerne un système de montage d'une tablette arrière d'un véhicule automobile, ainsi qu'un habillage de compartiment à bagages de véhicule automobile comprenant un tel système de montage.

Les véhicules automobiles du type à trois ou cinq portes comportent de façon connue une tablette arrière amovible, permettant de dégager le volume situé derrière la banquette arrière. En outre, ces tablettes sont généralement montées pivotantes de manière à pouvoir être soulevées pour faciliter l'accès au compartiment à bagages. A cet effet, elles sont souvent attachées au hayon par un lien souple de façon à se soulever en même temps que ce dernier.

On connaît déjà, du document FR-2 732 653, un dispositif de montage d'une tablette arrière de véhicule automobile sur ses supports latéraux, qui comprend les deux coins avant de la tablette et deux éléments d'accouplement solidaires des supports latéraux, lesdits supports faisant partie de l'habillage du compartiment à bagages. Ce dispositif permet la rotation de la tablette par rapport aux supports, tout en empêchant un mouvement vers l'arrière de la tablette lorsque celle-ci est en position d'utilisation, et ce avec un nombre limité de pièces. Cela présente l'avantage de simplifier la fabrication et le montage d'une telle tablette, et par conséquent de réduire les coûts qui y sont associés.

L'invention propose un perfectionnement d'un tel dispositif, sous la forme d'un système de montage d'une tablette arrière de véhicule comprenant un dispositif de blocage de la tablette en position relevée. Ce système permet non seulement d'obtenir les avantages mentionnés précédemment, mais également de s'affranchir de l'utilisation de liens souples pour soulever la tablette, ce qui contribue à simplifier le montage de la tablette ainsi que son utilisation.

A cet effet, selon un premier aspect, l'invention propose un système de montage de la tablette arrière d'un véhicule automobile sur des supports latéraux d'un habillage de compartiment à bagages, ledit système comprenant les deux coins avant de ladite tablette et deux éléments d'accouplement solidaires des supports qui sont agencés pour recevoir lesdits coins, lesdits éléments et lesdits coins étant agencés pour permettre une rotation de la tablette par rapport auxdits supports de sorte à permettre le passage réversible de la tablette d'une position d'utilisation dans laquelle la tablette est sensiblement parallèle aux supports latéraux, à une position relevée dans laquelle la tablette forme un angle avec les supports latéraux, ledit système comprenant un dispositif de blocage de ladite tablette en position relevée, ledit dispositif comprenant :
- des surfaces de butée complémentaires prévues respectivement sur lesdits coins et sur lesdits éléments d'accouplement qui, lorsque la tablette est en position relevée, empêchent son mouvement vers l'arrière, et
- un moyen de contrainte agencé pour exercer un effort sur la tablette vers l'arrière, de sorte à bloquer la tablette en position relevée.

Selon un deuxième aspect, l'invention concerne un habillage de compartiment à bagages de véhicule automobile comprenant deux supports latéraux, une tablette arrière et un tel système de montage de ladite tablette sur lesdits supports latéraux.

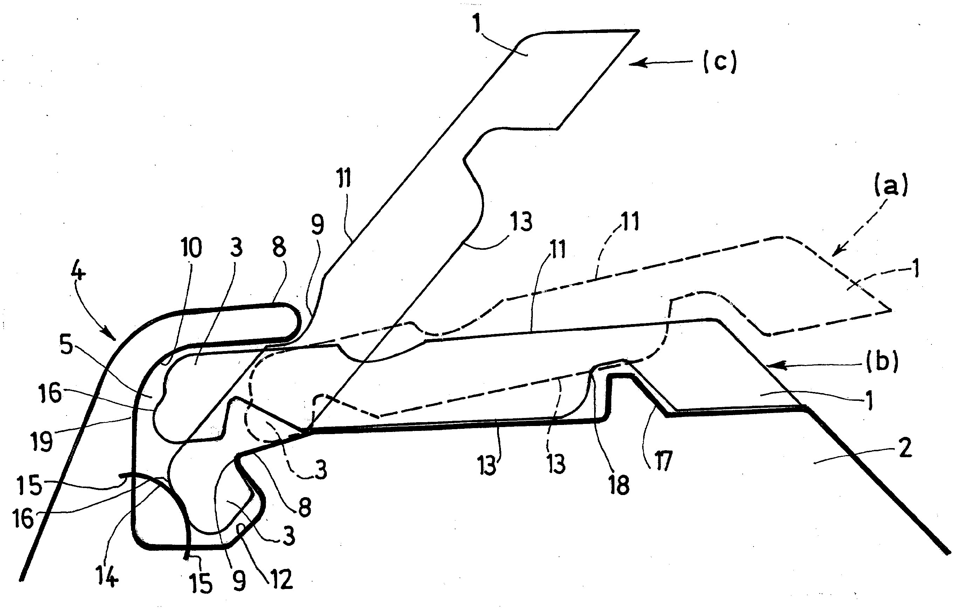

D'autres objets et avantages de l'invention apparaîtront au cours de la description qui suit, faite en référence à la figure annexée, qui représente une vue schématique partielle de côté d'un système de montage selon l'invention, montrant les supports latéraux d'un habillage de compartiment à bagages, ainsi qu'une partie de la tablette arrière, ladite tablette se trouvant dans trois positions : une position avant montage (a), une position d'utilisation (b) et une position relevée (c).

L'habillage du compartiment à bagages du véhicule automobile sur lequel la tablette 1 est destinée à être montée comprend deux supports latéraux 2 sensiblement symétriques par rapport au plan médian du véhicule.

La figure montre un seul de ces supports latéraux sur lequel est disposée la tablette arrière 1, la disposition de la tablette 1 sur l'autre support étant réalisée de façon symétrique. Le système de montage d'une telle tablette comprend les deux coins avant 3 de la tablette 1, ainsi que deux éléments d'accouplement 4 solidaires des supports 2, lesdits éléments 4 étant agencés pour recevoir lesdits coins 3.

Dans la suite de la description, les termes avant, arrière, supérieur et inférieur sont définis par rapport à la tablette 1 et aux supports latéraux 2 montés dans le véhicule.

Les éléments d'accouplement 4 et les coins 3 correspondants de la tablette 1 sont agencés pour permettre une rotation de la tablette 1 par rapport aux supports latéraux 2 entre deux positions extrêmes : une position d'utilisation dans laquelle la tablette 1 est sensiblement parallèle aux supports latéraux 2, c'est-à-dire en position horizontale une fois montée dans le véhicule, et une position relevée dans laquelle la tablette 1 forme un angle, par exemple de l'ordre de 45°, avec les supports latéraux 2, de sorte, lorsque la tablette 1 est disposée dans le véhicule, à faciliter l'accès au compartiment à bagages.

A cet effet, selon la réalisation représentée, chaque élément d'accouplement 4 est formé d'une cavité 5 sensiblement cylindrique comprenant une ouverture orientée vers l'arrière du véhicule, de forme et de dimensions agencées pour recevoir le coin avant 3 correspondant de la tablette 1.

Le système de montage de la tablette 1 sur les supports latéraux 2 comprend un dispositif de blocage de la tablette 1 en position relevée. Ce dispositif de blocage comprend tout d'abord des surfaces de butée complémentaires 8, 9 prévues sur les coins avant 3 de la tablette 1 et sur les éléments d'accouplement 4, ces surfaces 8, 9 empêchant le mouvement vers l'arrière de la tablette 1 lorsque celle-ci est en position relevée.

Selon la réalisation représentée, les surfaces de butée 8 prévues sur chaque élément d'accouplement 4 sont formées de zones en saillie de géométrie agencée pour pouvoir s'insérer dans des zones en creux 9 de forme complémentaire prévues sur le coin avant 3 correspondant de la tablette 1. La paroi supérieure 10 de la cavité 5 comprend une première surface de butée 8 agencée pour coopérer avec une surface de butée complémentaire 9 prévue sur la face supérieure 11 du coin 3 de la tablette 1, et la paroi inférieure 12 de ladite cavité 5 comprend une deuxième surface de butée 8 agencée pour coopérer avec une surface de butée complémentaire 9 prévue sur la face inférieure 13 du coin 3 de la tablette 1. Cet agencement assure le maintien dans la tablette 1 en position relevée, en empêchant son glissement vers l'arrière.

En outre, le dispositif de blocage de la tablette 1 en position relevée comprend un moyen de contrainte 14 agencé pour exercer un effort sur la tablette 1 vers l'arrière de sorte à bloquer ladite tablette en position relevée. En effet, l'effort exercé par ce moyen de contrainte 14, lorsque la tablette 1 est en position relevée, induit une mise en contact des surfaces de butée complémentaires 8, 9, de sorte à empêcher toute rotation non souhaitée de la tablette 1.

En particulier, le moyen de contrainte 14 est formé d'une lame élastique prévue, lorsque la tablette 1 est en position relevée, pour être disposée entre un coin avant 3 de la tablette 1 et l'élément d'accouplement 4 correspondant.

Selon la réalisation représentée, la lame élastique 14 est solidaire de l'élément d'accouplement 4. Il s'agit d'une lame fixée audit élément par ses deux extrémités 15, et dont la concavité est orientée vers l'avant du véhicule. Pour permettre une interaction optimale de la lame 14 avec le coin avant 3 de la tablette 1, un logement 16 de forme complémentaire est prévu sur ledit coin avant 3, de sorte à recevoir la partie centrale de la lame 14.

Selon une autre réalisation, non représentée, on peut prévoir que la lame élastique 14 soit solidaire d'un coin avant 3, et qu'un logement 16 soit prévu sur l'élément d'accouplement 4 pour recevoir ladite lame 14 lorsque la tablette 1 est en position relevée.

Par ailleurs, pour empêcher tout mouvement vers l'arrière de la tablette 1 lorsque celle-ci est en position d'utilisation, des surfaces de butée complémentaires 18, 17 sont prévues sur la tablette 1 et sur les supports latéraux 2, ces surfaces 17, 18 étant formées respectivement de zones en creux et de zones en saillie. Dans le mode de réalisation représenté, la surface complémentaire 18 est prévue sur la partie arrière de la tablette 1.

Pour permettre son montage dans le véhicule, la tablette 1 est introduite à son emplacement en faisant glisser ses coins avant 3 sur les supports latéraux 2, tout en la maintenant légèrement inclinée par rapport auxdits supports. Cette étape correspond à la position (a) représentée.

Lorsque la tablette 1 parvient en bout de course, il suffit à l'utilisateur d'abaisser légèrement la tablette 1 pour la placer en position horizontale d'utilisation, position dans laquelle seules les surfaces de butée complémentaires 17, 18 empêchant le mouvement vers l'arrière coopèrent. Cette position est représentée par la lettre (b) sur la figure.

A partir de cette position, la tablette 1 peut être soulevée pour permettre un accès facilité au compartiment à bagages, le bord avant de la tablette glissant contre la paroi intérieure 19 de la cavité 5. Par ce mouvement, le bord avant de la tablette 1 vient en appui contre la lame élastique 14, et les surfaces de butée complémentaires 8, 9 s'engagent les unes dans les autres, de telle sorte que la tablette 1 demeure en position relevée sans autre action de l'utilisateur. Cette position est représentée sur la figure par la lettre (c).

Puis, par simple appui sur la tablette 1 vers le bas, il est possible de surmonter l'effort exercé par le moyen de contrainte 14 de sorte à dégager les surfaces de butée 8, 9 les unes des autres, et faire ainsi revenir la tablette 1 en position d'utilisation.

## Revendications

1. Système de montage de la tablette arrière (1 ) d'un véhicule automobile sur des supports latéraux (2) d'un habillage de compartiment à bagages, ledit système comprenant les deux coins avant (3) de ladite tablette (1) et deux éléments d'accouplement (4) solidaires des supports (2) qui sont agencés pour recevoir lesdits coins (3), lesdits éléments (4) et lesdits coins (3) étant agencés pour permettre une rotation de la tablette (1) par rapport auxdits supports (2) de sorte à permettre le passage réversible de la tablette d'une position d'utilisation dans laquelle la tablette (1) est sensiblement parallèle aux supports latéraux (2), à une position relevée dans laquelle la tablette (1) forme un angle avec les supports latéraux (2), ledit système étant **caractérisé en ce qu'**il comprend un dispositif de blocage de ladite tablette (1) en position relevée, ledit dispositif comprenant :
- des surfaces de butée complémentaires (8, 9) prévues respectivement sur lesdits coins (3) et sur lesdits éléments d'accouplement (4) qui, lorsque la tablette (1) est en position relevée, empêchent son mouvement vers l'arrière, et
- un moyen de contrainte (14) agencé pour exercer un effort sur la tablette (1 ) vers l'arrière, de sorte à bloquer la tablette (1 ) en position relevée.

2. Système selon la revendication 1, **caractérisé en ce que** le moyen de contrainte (14) est formé d'une lame élastique prévue, lorsque la tablette (1) est en position relevée, pour être disposée entre un coin avant (3) de la tablette (1) et l'élément d'accouplement (4) correspondant.

3. Système selon la revendication 2, **caractérisé en ce que** la lame élastique (14) est solidaire d'un élément d'accouplement (4), un logement (16) agencé pour recevoir ladite lame (14), lorsque la tablette (1) est en position relevée, étant prévu sur le coin avant (3) correspondant.

4. Système selon la revendication 2, **caractérisé en ce que** la lame élastique (14) est solidaire d'un coin avant (3) de la tablette (1), un logement (16) agencé pour recevoir ladite lame (14), lorsque la tablette (1) est en position relevée, étant prévu sur l'élément d'accouplement (4) correspondant.

5. Système selon l'une quelconque des revendications 1 à 4, **caractérisé en ce que** chaque élément d'accouplement (4) est formé d'une cavité (5), la paroi supérieure (10) de ladite cavité (5) comprenant une surface de butée (8) agencée pour coopérer avec une surface de butée complémentaire (9) prévue sur la face supérieure (11) du coin (3) de la tablette (1), et la paroi inférieure (12) de ladite cavité (5) comprenant une surface de butée (8) agencée pour coopérer avec une surface de butée complémentaire (9) prévue sur la face inférieure (13) du coin (3) de la tablette (1).

6. Habillage de compartiment à bagages de véhicule automobile comprenant deux supports latéraux (2), une tablette arrière (1) et un système de montage de ladite tablette (1) sur lesdits supports latéraux (2) selon l'une quelconque des revendications 1 à 5.

7. Habillage selon la revendication 6, **caractérisé en ce qu'**il comprend des surfaces de butée complémentaires (17, 18) prévues sur la tablette (1) et sur les supports latéraux (2) pour empêcher un mouvement de la tablette (1) vers l'arrière lorsqu'elle est en position d'utilisation.
